(19) Europäisches Patentamt
European Patent Office
Office européen des brevets

(11) EP 2 268 726 B1

(12) # EUROPÄISCHE PATENTSCHRIFT

(45) Veröffentlichungstag und Bekanntmachung des Hinweises auf die Patenterteilung:
**28.11.2018 Patentblatt 2018/48**

(21) Anmeldenummer: **09729377.3**

(22) Anmeldetag: **17.02.2009**

(51) Int Cl.:
***C08K 3/36*** (2006.01) ***B60C 1/00*** (2006.01)

(86) Internationale Anmeldenummer:
**PCT/EP2009/051829**

(87) Internationale Veröffentlichungsnummer:
**WO 2009/124801 (15.10.2009 Gazette 2009/42)**

(54) **KAUTSCHUKMISCHUNG ENTHALTEND FÄLLUNGSKIESELSÄURE**

RUBBER MIXTURE COMPRISING PRECIPITATED SILICIC ACID

MÉLANGE DE CAOUTCHOUC CONTENANT DE L'ACIDE SILICIQUE PRÉCIPITÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **07.04.2008 DE 102008017731**

(43) Veröffentlichungstag der Anmeldung:
**05.01.2011 Patentblatt 2011/01**

(73) Patentinhaber: **Continental Reifen Deutschland GmbH**
**30165 Hannover (DE)**

(72) Erfinder:
- **SCHMIDT, Carmen**
  **30451 Hannover (DE)**
- **RECKER, Carla**
  **30167 Hannover (DE)**
- **FEY, Thomas**
  **34454 Bad Arolsen (DE)**

(74) Vertreter: **Finger, Karsten et al**
**Continental Aktiengesellschaft**
**Patente und Lizenzen**
**Postfach 169**
**30001 Hannover (DE)**

(56) Entgegenhaltungen:
**EP-A- 0 647 591**
**EP-A- 1 764 344**
**EP-B1- 2 262 730**
**WO-A-03/106339**
**DE-T2- 69 816 233**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 268 726 B1

## Beschreibung

Die Erfindung betrifft eine Kautschukmischung, insbesondere für Fahrzeugluftreifen, Gurte und Riemen, mit verbessertem Abriebsverhalten.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche durchgeführt, die Laufstreifenmischungen hinsichtlich ihrer Polymerkomponenten und ihrer Füllstoffe zu variieren. Es ist beispielsweise bekannt, der Kautschukmischung als Füllstoffe Ruß und/oder Kieselsäure zuzusetzen.

Eines der Ziele die bei der Reifenentwicklung im Vordergrund stehen, ist die Verringerung des Rollwiderstandes, was einen verminderten Kraftstoffverbrauch mit sich bringt. Durch den Einsatz von Kieselsäure enthaltenden Mischungen kann der Rollwiderstand gegenüber Mischungen, die nur Ruß enthalten, verbessert werden. Gleichzeitig sollte idealerweise keine Verschlechterung der anderen Reifeneigenschaften, wie Nassgriff und vor allem Abrieb beobachtet werden.

Da die Verteilung der Kieselsäure in der Kautschukmischung und die Art der Kieselsäure einen großen Einfluss auf die Reifeneigenschaften haben, wurden schon verschiedene Versuche unternommen, Kieselsäure mit entsprechenden Charakteristika, wie z.B. mit einer großen spezifischen hydrophilen Oberfläche, zu synthetisieren oder die Kieselsäure vorzubehandeln, zu modifizieren oder der Mischung spezielle Zusatzstoffe hinzuzufügen, um eine optimale Verteilung und optimale Reifeneigenschaften, vor allem ein verbessertes Abriebsverhalten, zu bewirken.

Bei Verwendung von Kieselsäuren gemäß z.B. EP 0520862 B1, EP 0670813 B1 EP 917519 B1, US 2005 / 0004297 A1, US 5,846,311 und US 5,929,156 wird versucht das Problem des Abriebverhaltens durch eine besonders gute Dispergierbarkeit der Kieselsäuren zu lösen. Es hat sich jedoch gezeigt, dass eine gute Dispergierbarkeit alleine nicht ausreichend ist um das Problem zufriedenstellend zu lösen.

Der Erfindung liegt daher die Aufgabe zugrunde, eine Kautschukmischung bereitzustellen, die eine optimale Verteilung der Kieselsäure in der Kautschukmischung und vor allem ein verbessertes Abriebsverhalten aufweist.

Gelöst wird diese Aufgabe durch eine Kautschukmischung mit folgender Zusammensetzung:

- zumindest einen Dienkautschuk und

- zumindest eine Fällungskieselsäure mit einer CTAB-Oberfläche größer oder gleich 150 $m^2$ / g und einer BET-Oberfläche größer oder gleich 150$m^2$ / g und einer DBP-Zahl zwischen 180 und 350 g / 100g und eine auf die Lage des Reflexes normierte Halbwertsbreite des Reflexes von kleiner oder gleich 0,95 und einem Homogenitätsverhältnis d 25 % zu d 75 % von 1,00 bis 1,80 und einer im gepressten Zustand relativen Breite $\gamma_{gepresst}$ von kleiner oder gleich 2,8 (g nm) / ml und einem Feinheitsindex $F.V._{gepresst}$ im gepressten Zustand zwischen 100 und 140 Å und

- weitere Zusatzstoffe.

Überraschenderweise wurde gefunden, dass sich durch die erfindungsgemäße Kautschukmischung, insbesondere durch den Einsatz zumindest einer Fällungskieselsäure gemäß den Kennzeichen von Anspruch 1 das Abriebsverhalten deutlich verbessern lässt, während die weiteren physikalischen Eigenschaften, wie z. B. Rollwiderstand und / oder Nassbremsen auf gleichem Niveau verbleiben. Dies gilt nicht nur für den Fahrzeuglaufstreifen, sondern auch für weitere innere Reifenbauteile. Die Kautschukmischungen für die weiteren inneren Reifenbauteile werden im Folgenden zusammengefasst, und wie in der Reifentechnologie üblich, auch als body compounds oder body-Mischungen bezeichnet.

Dieser Effekt lässt sich u. U. dadurch erklären, dass die verwendete Fällungskieselsäure auf Homogenität optimiert ist und gleichzeitig eine raue Oberfläche, quantifizierbar über den Morphologieindex IM, besitzt. Ohne an eine bestimmte Theorie gebunden zu sein, besteht die Vermutung, dass die Anbindung der Fällungskieselsäureoberfläche an die Polymermatrix und vor allem für die Kupplungsagenzien durch die raue Oberfläche verbessert wird. Somit führt die erfindungsgemäße Kautschukmischung nicht nur zu einem verbesserten Abriebverhalten, sondern auch zu einer verbesserten und beschleunigten Anbindung des Kupplungsagenz oder der Kupplungsagenzien.

Die in der Kautschukmischung verwendete Fällungskieselsäure weist im Vergleich zu den Fällungskieselsäuren des Standes der Technik eine besonders homogene und enge Partikelgrößenverteilung, ermittelt über eine Scheibenzentrifuge, in Kombination mit einer besonderen Porengrößenverteilung, ermittelt mittels Quecksilberporosimetrie, auf. Ferner ist die erfindungsgemäße Kieselsäure gut bis sehr gut dispergierbar. Vor allem diese Kombination ermöglicht es, eine über die gesamte Kautschukmatrix homogene Verstärkung zu gewährleisten, was insbesondere in einem verbesserten Abriebverhalten des Fahrzeugreifens resultiert.

Weitere Anwendung findet die erfindungsgemäße Kautschukmischung in der Mischungsentwicklung für Riemen und Gurte, insbesondere für Fördergurte.

Im täglichen Einsatz unterliegt insbesondere die Laufseite von Fördergurten starken mechanischen Beanspruchungen,

z. B. bei Umlenkung an Antriebs-, Umlenk- und / oder Knicktrommeln und Aushalten der auftretenden Zugkräfte. Daher ist auch hier das Abriebsverhalten von großer wirtschaftlicher Bedeutung.

In der vorliegenden Erfindung werden die Begriffe Kieselsäure, Verstärkerkieselsäuren und Fällungskieselsäure synonym verwendet.

Bevor sich die Anmelderin der näheren Erläuterung der erfindungsgemäßen Kautschukmischung widmet, möchte Sie an dieser Stelle die zur Charakterisierung der Fällungskieselsäure herangezogenen Prüfmethoden skizzieren:

**Bestimmung des Feststoffgehalts von Filterkuchen**

Nach dieser Methode wird der Feststoffgehalt von Filterkuchen durch Entfernen der flüchtigen Anteile bei 105 °C bestimmt.

Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 $\pm$ 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt den Feststoffgehalt (FG) in % gemäß

$$FG = A / E * 100\ \%,$$

mit A = Auswaage in g und E = Einwaage in g.

**Bestimmung des Feststoffgehalts von Fällsuspensionen**

Der Feststoffgehalt der Fällsuspension wird gravimetrisch nach Filtration der Probe bestimmt.

100,0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rißbildung des Filterkuchens zu verhindern. Anschließend wäscht man den Filterkuchen mit 100,0 ml destillierten Wasser. Der ausgewaschene Filterkuchen wird in eine tarierte Porzellanschale überführt und bei 105 $\pm$ 2 °C in einem Trockenschrank bis zur Gewichtskonstanz getrocknet. Nach Abkühlen auf Raumtemperatur wird das Gewicht der getrockneten Kieselsäure ($m_{Probe}$) ermittelt.

Der Feststoffgehalt bestimmt sich gemäß:

$$\text{Feststoffgehalt in g/l} = (m_{Probe} \text{ in g}) / (V_{Suspension} \text{ in l}).$$

**Bestimmung des Feststoffgehalts von Kieselsäurespeise**

Die Kieselsäurespeise wird im IR-Trockner bis zur Gewichtskonstanz getrocknet. Der Trocknungsverlust besteht überwiegend aus Wasserfeuchtigkeit.

In eine tarierte Aluminiumschale werden 2,0 g Kieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.

Die Gewichtsabnahme in % wird vom Gerät bei Anwahl des 0-100 %-Modus direkt angezeigt. Der Feststoffgehalt ergibt sich gemäß

$$\text{Feststoffgehalt in \%} = 100\ \% - \text{Gewichtsabnahme in \%}.$$

**Bestimmung der Alkalizahl**

Als Alkalizahl-Bestimmung (AZ-Zahl), versteht man den Verbrauch an Salzsäure in ml (bei 50 ml Probevolumen, 50 ml destillierten Wasser und einer verwendeten Salzsäure der Konzentration 0,5 mol/l) bei einer direkten potentiometrischen Titration von alkalischen Lösungen, bzw. Suspensionen bis zu einem pH-Wert von 8,30. Man erfasst hiermit den freien Alkaligehalt der Lösung bzw. Suspension.

Das pH-Gerät (Fa. Knick, Typ: 766 pH-Meter Calimatic mit Temperaturfühler) und die pH-Elektrode (Einstabmesskette

der Fa. Schott, Typ N7680) werden mit Hilfe zweier Pufferlösungen (pH = 7,00 und pH = 10,00) bei Raumtemperatur kalibriert. Die Einstabmesskette wird in die auf 40 °C temperierte Meßlösung bzw. -suspension bestehend aus 50,0 ml Fällsuspension und 50,0 ml entionisiertem Wasser getaucht. Anschließend gibt man tropfenweise Salzsäure-Lösung der Konzentration 0,5 mol/l hinzu, bis sich ein konstanter pH-Wert von 8,30 einstellt. Auf Grund des sich erst langsam einstellenden Gleichgewichts zwischen der Kieselsäure und dem freien Alkaligehalt bedarf es einer Wartezeit von 15 min bis zu einem endgültigen Ablesen des Säureverbrauchs. Bei den gewählten Stoffmengen und Konzentrationen entspricht der abgelesene Salzsäureverbrauch in ml direkt der Alkalizahl, welche dimensionslos angegeben wird.

**Bestimmung des pH-Wertes**

Die Bestimmung des pH-Wertes der Kieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Kieselsäure auf 100 ml entionisiertes Wasser).

**Bestimmung der elektrischen Leitfähigkeit**

Die Bestimmung der elektrischen Leitfähigkeit von Kieselsäure wird als 4%ige wässrige Suspension bei Raumtemperatur in Anlehnung an DIN EN ISO 787-14 durchgeführt. Gegenüber den Vorgaben dieser Norm wurden die Einwaagen verändert (4,00 g Kieselsäure auf 100 ml entionisiertes Wasser).

**Bestimmung der Feuchte**

Die Feuchte von Kieselsäuren wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

**Bestimmung der modifizierte Searszahl Vol 2 von Kieselsäuren**

Durch die Titration von Kieselsäure mit Kaliumhydroxid-Lösung im Bereich von pH 6 bis pH 9 läßt sich die modifizierte Searszahl Vol 2 als Maß für die Zahl an freien HydroxyGruppen bestimmen.
Der Bestimmungsmethode liegen die folgenden chemischen Reaktionen zu Grunde, wobei "Si"-OH eine Silanolgruppe der Kieselsäure symbolisieren soll:

$$\text{"Si"-OH} + NaCl \Rightarrow \text{"Si"-ONa} + HCl$$

$$HCl + KOH \Rightarrow KCl + H_2O.$$

Durchführung

10.00 g einer pulverförmigen, einer in etwa sphärische Partikel aufweisenden oder granulären Kieselsäure mit 5 ± 1 % Feuchte werden 60 Sekunden mit einer IKA-Universalmühle M 20 (550 W; 20 000 U/min) zerkleinert. Gegebenenfalls muß der Feuchtegehalt der Ausgangssubstanz durch Trocknen bei 105 °C im Trockenschrank oder gleichmäßiges Befeuchten eingestellt und die Zerkleinerung wiederholt werden. 2.50 g der so behandelten Kieselsäure werden bei Raumtemperatur in ein 250 ml Titriergefäß eingewogen und mit 60.0 ml Methanol p. A. versetzt. Nach vollständiger Benetzung der Probe werden 40.0 ml entionisiertes Wasser zugegeben, und man dispergiert mittels eines Ultra Turrax T 25 Rührers (Rührwelle KV-18G, 18 mm Durchmesser) 30 Sekunden lang bei einer Drehzahl von 18 000 U/min. Mit 100 ml entionisiertem Wasser werden die am

Gefäßrand und Rührer anhaftenden Probepartikel in die Suspension gespült und in einem thermostatisiertem Wasserbad auf 25 °C temperiert.
Das pH-Messgerät (Fa. KNICK, Typ: 766 pH-Meter Calimatic mit Temperaturfühler) und die pH-Elektrode (Einstabmesskette der Fa. SCHOTT, Typ N7680) werden unter Verwendung von Pufferlösungen (pH 7.00 und 9.00) bei Raumtemperatur kalibriert. Mit dem pH-Meter wird zunächst der Ausgangs-pH-Wert der Suspension bei 25 °C gemessen, danach wird je nach Ergebnis mit Kaliumhydroxid-Lösung (0.1 mol/l) bzw. Salzsäurelösung (0.1 mol/l) der pH-Wert auf 6.00 eingestellt. Der Verbrauch an KOH- bzw. HCl-Lösung in ml bis pH 6.00 entspricht $V_1$'.
Danach werden 20.0 ml Natriumchlorid-Lösung (250.00 g NaCl p. A. mit entionisiertem Wasser auf 11 aufgefüllt) zudosiert. Mit 0.1 mol/l KOH wird dann die Titration bis zum pH-Wert 9.00 fortgesetzt. Der Verbrauch an KOH-Lösung in ml bis pH 9.00 entspricht $V_2$'.
Anschliessend werden die Volumina $V_1$', bzw. $V_2$' zunächst auf die theoretische Einwaage von 1 g normiert und mit 5

erweitert, woraus sich VOL 1 und die modifizierte Searszahl Vol 2 in den Einheiten ml/(5 g) ergeben.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt: 12,50 g pulverförmige oder in etwa sphärischen Partikel aufweisende Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 1 bis 3,15 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.
Die DBP-Aufnahme wird in g/(100 g) angegeben und anhand der folgenden Formel berechnet:

$$DBP = \frac{V * D * 100}{E} * \frac{g}{100\ g} + K$$

mit

DBP = DBP-Aufnahme in g/(100 g)
*V* =Verbrauch an DBP in ml
*D* =Dichte von DBP in g/ml (1,047 g/ml bei 20 °C)
*E* = Einwaage an Kieselsäure in g
*K* =Korrekturwert gemäß Feuchtekorrekturtabelle in g/(100 g)

Die DBP-Aufnahme ist für die wasserfreie, getrocknete Kieselsäure definiert. Bei Verwendung von feuchten Fällungskieselsäuren ist der Korrekturwert K für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.

Tabelle 1: Feuchtekorrekturtabelle für Dibutylphthalataufnahme (wasserfrei)

| % Feuchte | .% Feuchte<br>,0 | ,2 | ,4 | ,6 | ,8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

**Bestimmung der BET-Oberfläche**

Die spezifische Stickstoff-Oberfläche (im folgenden BET-Oberfläche genannt) der pulverförmigen, in etwa sphärische Partikel aufweisende oder granulären Kieselsäure wird in Anlehnung an ISO 5794-1/Annex D mit dem Gerät TRISTAR 3000 (Fa. Micromeritics) nach der Multipointbestimmung gemäß DIN-ISO 9277 ermittelt.

**Bestimmung der CTAB-Oberfläche**

Die Methode beruht auf der Adsorption von CTAB (N-Hexadecyl-N,N,N-trimethylammoniumbromid) an der "äußeren" Oberfläche der Kieselsäure in Anlehnung an die ASTM 3765, bzw. NFT 45-007 (Kapitel 5.12.1.3).
Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \Rightarrow (C_{20}H_{37}O_4)SO_3N(CH_3)_3(C_{16}H_{33}) + NaBr$$

NDSS CTAB

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0,1 µm, 47 mm Ø, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l; Bestell-Nr. 6057.4700 NDSS-Lösung 0,00423 mol/l), bei 25°C aufbewahrt und innerhalb von einem Monat aufgebraucht.

Durchführung

**1. Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).
Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

**2. Adsorption**

10,0 g der pulverförmigen, der in etwa sphärische Partikel aufweisende oder granulierten Kieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. IKA Mühle M 20 mit Edelstahlschläger M 21) 60 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt.

Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

Berechnung

$$CTAB(nicht\ feuchtekorrigiert) = \frac{V_A - V_B}{V_A} * \frac{C_{CTAB} * M_{CTAB} * T_1 * P}{E}$$

$V_A$ = Verbrauch an NDSS-Lösung in ml bei der Titration der Blindprobe
$V_B$ = Verbrauch an NDSS-Lösung in ml bei Verwendung des Filtrats
$C_{CTAB}$ = Konzentration der CTAB-Lösung in mol/l
$M_{CTAB}$ = Molmasse von CTAB = 364,46 g/mol
$T_1$ = Zugegebene Menge an CTAB-Lösung in 1
P = Platzbedarf von CTAB = 578,435 $m^2/g$
E = Einwaage an Kieselsäure

Die CTAB-Oberfläche wird auf die wasserfreie Kieselsäure bezogen, weshalb die folgende Korrektur durchgeführt wird.

$$CTAB = \frac{CTAB(nicht\ feuchtekorrigiert)\ in\ m^2/g * 100\,\%}{100\,\% - Feuchte\ in\ \%}$$

Die Feuchte der Kieselsäure wird gemäß der beschriebenen Methode "Bestimmung der Feuchte" ermittelt.

**Bestimmung der Partikelgrößenverteilung**

Im Folgenden wird der Begriff Partikelgrößenverteilung synonym zu dem Begriff Teilchengrößenverteilung verwandt.
Bestimmt wird die Teilchengrößenverteilung von Kieselsäure. Die zu untersuchende Probe wird vermahlen, anschließend in einer wässrigen Lösung dispergiert und in einer Scheibenzentrifuge nach ihrer Teilchengröße aufgetrennt: je größer - und damit schwerer - die Partikel sind, umso schneller bewegen sie sich im Schwerefeld der Zentrifuge. Sie passieren dort eine Lichtschranke; gemessen wird die Absorption als Funktion der Zeit. Aus diesen Daten wird die Teilchengrößenverteilung, d. h. die Häufigkeit als Funktion des Teilchendurchmessers errechnet.

**Verwendete Geräte:**

| | |
|---|---|
| Scheibenzentrifuge | CPS Instruments Inc., Typ DC24000 |
| Utraschallfinger | Hielscher Typ UP200S mit Sonotrode S14 |
| Universalmühle | IKA Typ M20 mit Edelstahlschläger M21 |
| Kühlbad Lauda | Typ RM6 mit Kältethermostat RMS |
| Analysenwaage | |

Spritzen: 1,0 ml und 2,0 ml
Rollrandgläschen, 30 ml

**Chemikalien:**

Ethanol p. A., Fa. Merck
Wasser, deionisiert
Saccharose, Fa. Acros
Dodecan, Fa. Merck
PVC Referenz Standard; das Peakmaximum des verwendeten Referenz Standards sollte zwischen 500 und 600 nm liegen.

**Vorbereiten der Scheibenzentrifuge**

Die laufende Scheibenzentrifuge wird mit einem Dichtegradienten aus Saccharoselösungen befüllt und mit einer Dodecandeckschicht versehen. Vorgehensweise:
Es werden Zuckerlösungen unterschiedlicher Konzentration hergestellt. Die Massenanteile der Zuckerlösungen liegen hierbei zwischen w = 8,0 % und w = 24,0 %.
Der Dichtegradient wird in neun Stufen aufgebaut:
24,0 % / 22,0 % / 20,0 % / 18,0 % / 16,0 % / 14,0 % / 12,0 % / 10,0 % / 8,0 %
Es werden jeweils 1,6ml der verschiedenen Zuckerlösungen pro Dichtestufe in die Scheibenzentrifuge injiziert, wobei mit der höchsten Konzentration begonnen wird.
Zum Abschluss werden 0,5ml Dodecan injiziert.

**Probenvorbereitung**

Vor der Dispergierung wird die Kieselsäureprobe gemahlen. Dazu werden 15g (± 0,5g) Probenmaterial in der IKA Universalmühle 60 Sekunden gemahlen. Von diesem gemahlenen Material werden 0,75g (± 0,05g) in ein 30ml Rollrandgläschen eingewogen und mit 15ml deionisiertem Wasser versetzt. Das befüllte Rollrandgläschen (Firma LABC, 5ml ND20 Rollrandflasche, 38 x 20mm, Klarglas) wird mit Hilfe einer Stativzange im Kühlbad, welches auf ca. 5°C temperiert ist, fixiert. Der Ultraschallfinger wird so positioniert, dass die Sonotrode 5,5cm (mindestens jedoch 5cm) tief in das Fläschchen eintaucht - vom oberen Rand des Rollrandfläschchens aus gemessen. Die Probe wird 15 Minuten mit 100% Amplitude und 100% Puls (Cycle = 1) beschallt.

**Durchführung**

Vor Beginn der Messungen lässt man die Zentrifuge mindestens 30min bei der voreingestellten Geschwindigkeit (20000 UPM) warmlaufen. Alle Messungen laufen ebenfalls bei einer Umdrehungsgeschwindigkeit von 20000 UPM. In der Gerätesoftware wird die Messprozedur aufgerufen. Für die Messungen sind folgende Parameter einzustellen:

Sample Parameters:

| | |
|---|---|
| Maximum Diameter: | 5,10 microns |
| Minimum Diameter: | 0,01 microns |
| Particle Density: | 2,0 g / ml |
| Particle Refractive Index: | 1,44 |
| Particle Absorption: | 0,001 K |
| Non-Sphericity Factor: | 1,1 |

Calibration Standard Parameters (abhängig von dem verwendeten Kalibrierstandard):

Beispiel:

| | |
|---|---|
| Peak Diameter: | 0,585 microns |
| Half Height Peak Width: | 0,2 microns |

(fortgesetzt)

| | |
|---|---|
| Particle Density: | 1,385 g / ml |

Fluid Parameters:

| | |
|---|---|
| Fluid Density: | 1,045 g / ml |
| Fluid Refractive Index: | 1,344 |
| Fluid Viscosity: | 1,2 cps |

In dem Untermenü "System Configuration" wird die Messwellenlänge auf 470nm eingestellt.
In dem Untermenü "Runtime Options" werden folgende Parameter eingestellt:

| | |
|---|---|
| Force Baseline: | Yes |
| Correct for Non-Stokes: | No |
| Extra Software Noise Filtration: | No Extra Filter |
| Baseline Drift Display: | Do Not Show |
| Calibration method: | External |

| | |
|---|---|
| Samples per calibration: | 1 |

Zur Messung der Probendispersion wechselt man in das Untermenü "Operate Analyser". Die für die Messung erforderlichen Schritte werden in der "Instructions"-Zeile nacheinander abgefragt. Vor jeder Messung ist ein Kalibrierstandard aufzunehmen. Es werden jeweils 0,1ml des Standards bzw. der Probendispersion injiziert. Von jeder zu untersuchenden Probe wird eine Doppelbestimmung (inkl.
Dispergierung mittels Ultraschall) durchgeführt.
Die Messungen an den zu analysierenden Kieselsäuredispersionen werden manuell an dem Punkt abgebrochen, an dem die Absorption, nach der Aufnahme des zu analysierenden Peaks, der in der Regel zwischen 30nm bis 250nm liegen sollte, wieder das Ausgangsniveau, in der Regel 0, erreicht.

**Ergebnis**

Aus der Rohdatenkurve (korrigiert um die Lichtstreuung) wird die Gewichtsverteilung (weight distribution) von der Gerätesoftware (CPS Disc Centrifuge Operating Software; Version 9.5b; Released February 2006) ermittelt. Die Ergebnisse ergeben sich jeweils aus den aus der Doppelbestimmung gemittelten Werten.
Angegeben werden:

**Peak (Mode),** Einheit μm, häufigste Teilchengröße, entspricht dem Abszissenwert des Maximums der Verteilungsfunktion. Dieser Wert wird von der Gerätesoftware berechnet.

**Halbwertsbreite (Half Width),** Einheit μm, entspricht der Breite der Verteilungsfunktion bei 50 % von deren Maximalwert. Dieser Wert wird von der Gerätesoftware berechnet.

**Oversize Percentiles,** Einheit μm, entspricht dem angegebenen Anteil (1 %, 5 %, 10 %, 25 %, 50 %, 75 %, 90 %, 95 %, 99 %) der Partikel, die größer sind als der angegebene Partikeldurchmesser der Gewichtsverteilung. Diese Werte werden von der Gerätesoftware berechnet.

**Quartile ratio d 25 % / d 75 %,** keine Einheit, ein weiteres Maß für die Breite der Verteilung, gebildet aus dem Verhältnis der Partikelgrößen bei 25 % bzw. 75 %, abzulesen aus den Parametern Oversize Percentiles. Dieser Wert muss manuell berechnet werden. Er wird auch als Homogenitätsverhältnis bezeichnet.

**Half Width / Peak,** keine Einheit, der Quotient aus den Angaben der Halbwertsbreite und des Peaks muss manuell berechnet werden.

**Bestimmung der Partikelgröße mittels Laserbeugung**

Die Anwendung der Laserbeugung zur Bestimmung von Teilchengrößen von Pulvern basiert auf der Erscheinung, dass Teilchen monochromatisches Licht mit unterschiedlichem Intensitätsmuster in alle Richtungen streuen. Diese Streuung ist abhängig von der Teilchengröße. Je kleiner die Teilchen, desto größer sind die Streuungswinkel.
Die Probenvorbereitung und Messung (Spülen des Moduls, ect.) erfolgt im Fall hydrophiler Fällungskieselsäure mit VE Wasser, im Fall nicht ausreichend mit Wasser benetzbarer Fällungskieselsäure mit reinem Ethanol.
Vor Beginn der Messung lässt man das Laserbeugungsgerät LS 230 (Fa. Coulter) und das Flüssigkeitsmodul (Small Volume Module Plus, 120 ml, Fa. Coulter) 2 h warmlaufen, spült das Modul dreimal mit VE Wasser, kalibriert es und spült im Falle hydrophober Fällungskieselsäuren dreimal mit Ethanol.
In der Steuerleiste der Gerätesoftware wählt man über dem Menüpunkt "Messung" das Dateifenster "Opt. Modell berechnen" aus und legt die Brechungsindizes in einer .rfd-Datei fest: Flüssigkeitsbrechungsindex B. I. Real = 1,332 (1,359 für Ethanol); Material Brechungsindex Real = 1,46; Imaginär = 0,1; Formfaktor 1. Zusätzlich wählt man in diesem Dateifenster die folgenden Punkte aus: Offsetmessung, Justieren, Hintergrundmessung, Messkonz. einstellen, Probeninfo eingeben, Messinfo eingeben, Messzeit 60 s, Anzahl Messungen 1, ohne PIDS Daten, Größenverteilung. Die Pumpengeschwindigkeit wird am Gerät auf 30 % eingestellt.
Es erfolgt die Zugabe der homogenen Suspension von 1 g Kieselsäure in 40 ml VE Wasser mit einer 2 ml Einwegpipette in das Flüssigkeitsmodul des Gerätes in der Art, dass eine konstante Konzentration mit einer Lichtabsorption von 8 bis 12 % erreicht wird und das Gerät "OK" meldet. Die Messung erfolgt bei Raumtemperatur. Aus der Rohdatenkurve berechnet die Software auf Basis der Volumenverteilung unter Berücksichtigung der Mie-Theorie und der optischen Modellparameter (.rfd-Datei) die Teilchengrößenverteilung und den $d_{50}$-Wert (Medianwert).

**Bestimmung des Siebrückstands (Alpine)**

Bei dieser Siebrückstandsbestimmung handelt es sich um eine Luftstrahlsiebung in Anlehnung an DIN ISO 8130-1 mittels eines Luftstrahlsiebgeräts S 200 der Fa. Alpine. Zur Bestimmung des $d_{50}$-Werte von Mikrogranulaten und Granulaten werden dazu auch Siebe mit einer Maschenweite > 300 µm eingesetzt. Um den $d_{50}$-Wert zu ermitteln, müssen die Siebe so gewählt werden, dass sie eine Partikelgrößenverteilung liefern, aus der der $d_{50}$-Wert gemäß Figur 2 bestimmt werden kann. Die grafische Darstellung und Auswertung erfolgt analog zu ISO 2591-1, Kapitel 8.2.

Unter dem $d_{50}$-Wert ist der Partikeldurchmesser in der kumulativen Partikelgrößenverteilung zu verstehen, bei der 50% der Partikel einen geringeren oder gleichen Partikeldurchmesser aufweisen als/wie die Partikel mit dem Partikeldurchmesser des $d_{50}$-Wertes.

**Bestimmung des Siebrückstands (Ro-Tap)**

Mit dieser Methode wird der Anteil gröberer Partikel (> 300 µm) und der Anteil feinerer Partikel (< 75 µm) von Granulaten mittels Siebung bestimmt.
Es werden eine Siebpfanne, ein Analysensieb mit Metallsiebgewebe (DIN ISO 565 T.2, Nennmaschenweite 75 µm), ein Analysensieb mit Metallsiebgewebe (DIN ISO 565 T.2, Nennmaschenweite 150 µm), sowie ein Analysensieb mit Metallsiebgewebe (DIN ISO 565 T.2, Nennmaschenweite 300 µm) mit jeweils 200 mm Siebdurchmesser verwendet. Der Siebturm wird in der genannten Reihenfolge in eine Analysensiebmaschine Ro-Tap B 8260 mit Zeitschaltuhr der Firma Tyler eingebracht und eine homogene Probenmenge von 100,00 g der Kieselsäuregranulate wird auf das oberste Sieb überführt. Der Siebdeckel und der Klopfer werden aufgesetzt und die Siebung erfolgt mit einer Kreis- und Klopfbewegung für 5 min.

Die Siebrückstände (Ro-Tap) werden bestimmt gemäß

$$\text{Siefraktion (Ro-Tap, < 75 µm) in \%} = (A_S/E) * 100\,\%,$$

sowie

$$\text{Siebrückstand (Ro-Tap, > 300 µm) in \%} = (A_{300}/E) * 100\,\%,$$

mit

$A_S$ = Auswaage des Rückstands in der Siebpfanne in g,
$A_{300}$ = Auswaage des Rückstands auf dem Sieb mit 300 µm Nennmaschenweite in g

und E = Einwaage in g.

**Bestimmung des Aluminiumoxidgehalts**

Die Bestimmung des Aluminiumoxidgehalts erfolgt in Anlehnung an DIN EN ISO 3262-18 mittels Flammenatomadsorptionsspektroskopie bei einer Wellenlänge von 309,3 nm. Ca. 20 g einer Kieselsäure werden auf 0,01 g genau in einen Platintiegel eingewogen und mit destilliertem Wasser befeuchtet. 1 ml konz. Flusssäure (40 %, p.a.) wird zugefügt und die Mischung wird in einem Sandbad bis zum Abrauchen erhitzt. Nach und nach wird Salpetersäure tropfenweise zugegeben, bis die Kieselsäure komplett aufgelöst ist. Nach Eindampfen bis zur Trockene wird der Rückstand in 3 ml konz. Salzsäure gelöst. Die abgekühlte Lösung wird quantitativ in einen 100 ml-Meßbecher überführt und dort auf 100 ml mit destilliertem Wasser aufgefüllt.
Die so hergestellte Lösung wird gemäß der Bedienungsanleitung in einem Flammenatomadsorptionsspektrometer untersucht (Wellenlänge: 309,3 nm, Slit S: 0,7 nm, Gasstrom: Acetylen/$N_2O$).
Die Bestimmung des Aluminiumoxidgehaltes erfolgt an der Originalprobe, der Gehalt wird jedoch auf die für 2 h bei 1000 °C geglühte Probe bezogen:

$$\%Al_2O_3\text{ (bezogen auf geglühte Substanz)} = \frac{\%Al_2O_3\text{ (bezogen auf Originalsubstanz)}*100}{100\%\text{ - Glühverlust in }\%}$$

**Bestimmung der Porengrößenverteilung**

**Vorbehandlung der Kieselsäuren vor der Quecksilberporosimetrie**

Die Kieselsäure wird vor der Messung einer Druckbehandlung unterzogen. Genutzt wird hierzu eine Manual Hydraulic Press (Bestell-Nr. 15011 der Fa. Specac Ltd., River House, 97 Cray Avenue, Orpington, Kent BR5 4HE, U.K.). Dabei werden in eine "Pellet Die" mit 13mm Innendurchmesser der Fa. Specac Ltd. 250mg Kieselsäure eingewogen und laut Anzeige mit lt belastet. Diese Last wird 5s gehalten und gegebenenfalls nachgeregelt. Anschließend wird die Probe entspannt und für 4h bei 105 ± 2°C in einem Umlufttrockenschrank getrocknet.

**Durchführung der Quecksilberporosimetrie Messung**

Die Methode basiert auf der Hg-Intrusion gemäß DIN 66133, wobei ein Autopore IV 9500-Gerät der Firma Micromeritics verwendet wird. Die Einwaage der Kieselsäure in den Penetrometer vom Typ10 erfolgt auf 0,001g genau. Anschliessend wird das Penetrometer langsam auf 50μm Hg evakuiert und für 5min bei diesem Druck belassen. Die Bedienung des Autopore-Geräts erfolgt gemäß der Bedienungsanleitung mit der Software Version IV 1.05. Jede Messung wird um eine Leermessung des Penetrometers korrigiert. Der Messbereich beträgt 0,0025 - 420MPa, wobei mindestens 136 Gleichgewichtsmesspunkte (gerätespezifisches Kriterium von 10s) verwendet werden (im Bereich 0,0025 - 0,25MPa: 30 Punkte, im Bereich 0,25 - 15MPa: 53 Punkte, 15 - 150MPa: 40Punkte, im Bereich 150 - 420MPa: 13 Punkte). Ggf. fügt die Software weitere Messpunkte ein, wenn dass inkrementelle Intrusionsvolumen > 0,04ml/g beträgt. Die Glättung der Intrusionskurve erfolgt mittels der "smooth differentials"-Funktion der Gerätesoftware.

**Ermittlung des Feinheitsindex F.V. (mit Druckvorbehandlung),** Einheit Å

Der Feinheitsindex F.V. repräsentiert den mittleren Radius der Intra-Aggregatporen, d.h. den Radius der Poren, dem die Porenoberfläche $S_0/2$, gemessen durch Quecksilberporosimetrie, entspricht ($S_0$ ist die Oberfläche, die durch alle Poren, deren Durchmesser über oder gleich 100 Å beigetragen wird). Zur Berechnung werden ein Kontaktwinkel 140° und eine Oberflächenspannung von 484mN/m angenommen.

**Bestimmung des Porenvolumenverhältnis V2 / V1 (mit Druckvorbehandlung) Porenvolumenverhältnis V2 / V1,** keine Einheit

Da Kieselsäuren in verschiedenen Darreichungsformen vorliegen können - z. B. in Form von Pulvern, in etwa sphärischen Partikeln oder Granulaten - muss, auch hier, um einen von der Darreichungsform weitgehend unabhängigen Messwert zu erhalten, zuvor eine mechanische Druckbehandlung der Kieselsäure erfolgen.
Zur Berechnung werden ein Kontaktwinkel 130 und eine Oberflächenspannung von 484mN/m angenommen. Das Porenvolumen V1 ergibt sich aus dem kumulierten Porenvolumen im Porendurchmesserbereich von 5,5 - 40nm. Das Porenvolumen V2 ergibt sich aus dem kumulierten Porenvolumen im Porendurchmesserbereich von 17,5 - 27,5nm.

Der Anteil der Poren in dem Bereich V2 ergibt sich aus dem Quotient V2 / V1.

**Bestimmung der relativen Breite der Porengrößenverteilung (mit Druckvorbehandlung)**

**relative Breite** $\gamma$, Einheit (g nm)/ml

Da Kieselsäuren in verschiedenen Darreichungsformen vorliegen können - z. B. in Form von Pulvern, in etwa sphärischen Partikeln oder Granulaten - muss, auch hier, um einen von der Darreichungsform weitgehend unabhängigen Messwert zu erhalten, zuvor eine mechanische Druckbehandlung der Kieselsäure erfolgen.
Zur Berechnung werden ein Kontaktwinkel 140° und eine Oberflächenspannung von 480mN/m angenommen. Um die relative Breite $\gamma$ der Porengrößenverteilung zu bestimmen, wird auf die Daten der negativen logarithmischen Ableitung der Intrusionskurve im Porendurchmesserbereich von 3,5nm bis 5$\mu$m der folgende Algorithmus angewendet: Der Algorithmus benutzt ein von großen Porendurchmessern kommendes, bewegliches Fenster aus drei aufeinanderfolgenden Messpunkten der negativen logarithmischen Ableitung der Intrusionskurve und legt eine Parabel durch die Punkte. Das Maximum der Parabel wird als das gesuchte Maximum A bei einem Porendurchmesser a definiert. Es wird kontrolliert, ob der Punkt a im gesuchten Porendurchmesserbereich liegt und das globale Maximum der negativen logarithmischen Ableitung der Intrusionskurve darstellt. Wenn dies nicht der Fall ist, wird das Fenster um einen Punkt verschoben, erneut eine Parabel durchgelegt, und der Vorgang solange wiederholt bis beide Kriterien erfüllt sind. Dann wird B als 0,300 A definiert. b stelle den Porendurchmesser der Kurve dar, der kleiner als a ist, an dem zum ersten Mal der Wert B erreicht wird. Schließlich wird die relative Breite $\gamma$ der Porengrößenverteilung definiert als $\gamma$ = (a-b)/(A-B) = (a-b)/(0,7 A), wobei a und b die Einheiten Nanometer und $\gamma$ die Einheit (g nm)/ml aufweisen. Ein typischer Kurvenverlauf der negativen logarithmischen Ableitung des kumulierten Porenvolumens *V* gemäß Gleichung 1 hinsichtlich des Porendurchmessers x mit i Messpunkten und den Merkmalen *a, b, A* sowie *B* ist in Figur 1 dargestellt.

Gleichung 1:

$$\frac{dV}{d\log x} = \frac{dV}{\frac{1}{x}dx} = x\frac{dV}{dx}$$

$$x\frac{dV}{dx} \approx x\frac{\Delta V}{\Delta x}\Big|_{\Delta x = x_i - x_{i-1}} = x_i \frac{V_i - V_{i-1}}{x_i - x_{i-1}} \approx x_i \frac{V_{i+1} - V_{i-1}}{x_{i+1} - x_{i-1}}$$

**Bestimmung des Morphologieindex**

Die Messungen wurden durchgeführt unter Anwendung eines FISONS HRGC Mega 2-Gerätes, ausgerüstet mit einem Flammenionisationsdetektor (FID).
Die Kieselsäure wurde 2 Minuten lang bei einer Last von 2 Tonnen mit einer hydraulischen Laborpresse von ICL (International Crystal Laboratories) gepresst, um ein einzelnes rundes Pellet von einem Durchmesser von 13 mm und einer Höhe von 5 mm zu erzeugen.
Dieses Pellet wird dann 30 Sekunden manuell mit einem Stößel in einem Achatmörser zerstampft (30 mL Kapazität, 65 mm interner Durchmesser). Das zerstampfte Material wird dann durch 2 Edelstahlsiebe mit einem Durchmesser von 100 m und einer Höhe von 45 m der Firma Bioblok Scientific manuell gesiebt. Die Maschen der Siebe sind 0,425 mm (Mesh 40) und 0,106 mm (Mesh 140). Die Siebe sind in der Reihenfolge abnehmender Maschenweite angeordnet. Unterhalb des letzten Siebes befindet sich eine Auffangschale. Diese Prozedur wird mit mehreren Pellets wiederholt, bis genügend Material vorhanden ist, um die Säule zu füllen. Das Material, das auf dem Sieb mit der Maschenweite von

0,106 mm verbleibt (Siebfraktion von 0,425 bis 0,106 mm) wird verwendet, um die Säule zu füllen.

Die chromatographische Säule wird folgendermaßen vorbereitet: eine Edelstahlröhre von 1/8"-Durchmesser wird auf die erforderliche Länge abgeschnitten. Die Länge der Säule hängt von der spezifischen Oberfläche des zu untersuchenden Feststoffes ab. Hierbei gilt: Die Menge an Feststoff in der Säule muss eine Oberfläche von 20 bis 40 $m^2$ aufweisen. Hersteller dieser Röhren ist Interchrom.

Das vorbereitete Pulver (siehe obige Beschreibung) wird homogen in die chromatographische Säule durch einen konischen Trichter eingefüllt. Es muss darauf geachtet werden, dass keine Hohlräume in der Schüttung entstehen. Der Flammenionisationsdetektor wird bei 150°C betrieben, der Injektor auf 120°C geheizt. Vor der Untersuchung wird die Säule ausgeheizt, indem sie bei 160°C bei einem Helium-Fluss von 15 l/min für 15 Stunden ausgeheizt wird. Die Bestimmung der Geraden der n-Alkane und der Oberflächennanorauhigkeit wird bei 110°C unter einer Helium-Fluss-Rate von 20 l/min durchgeführt. Für den Flammenionisationsdetektor wird die empfindlichste Einstellung des Detektors gewählt.

Die linearen Alkane, die für die Bestimmung der Geraden genutzt wurden, sind n-Heptan, n-Octan, n-Nonan und n-Decan. Mindestens 3 Injektionen werden für jede Lösung vorgenommen, die Netto-Retentionszeiten ermittelt und die Werte gemittelt.
Die Netto-Retentionszeit jeder Lösung ergibt sich aus der Differenz von Bruttoretentionszeit und Totzeit. Für die Totzeit wird die Bruttoretentionszeit von Methan zugrunde gelegt. Die Bruttoretentionszeiten entsprechen der Retentionszeit des Schwerpunkts des chromatographischen Peaks (nicht von der Peakspitze).
Hierbei ist es wichtig, dass die Netto-Retentionszeiten von der eingespritzten Menge unabhängig sind (das ist der Nachweis, dass unter den Bedingungen der unendlichen Verdünnung gemessen wird).

Die verzweigten und zyklischen Alkan-Proben für die Bestimmung der Nanorauigkeit sind 2,2,4-Trimethylpentan, 2,2-Dimethylhexan und Cyclooctan. Der Morphologie-Index (IM) wird berechnet aus dem Verhältnis des Retentionsvolumens des jeweiligen verzweigten oder zyklischen Alkans $V_G(M)$ und des Retentionsvolumens eines n-Alkans $V_G(C)$, das die gleiche Zugänglichkeit zur Silica Oberfläche aufweist:

$$IM = V_G(M) / V_G(C)$$

Auf diese Weise wird für 2,2,4-Trimethylpentan, 2,2-Dimethylhexan und Cyclooctan jeweils ein IM bestimmt. Der in den Ansprüchen und der Beschreibung angegeben IM entspricht dem Mittelwert der drei zuvor bestimmten Morphologieindices für 2,2,4-Trimethylpentan, 2,2-Dimethylhexan und Cyclooctan.

Alle injizierten Lösungen haben chromatographische Qualität. Zum Einsatz kamen folgende Produkte:

n-Heptan, für HPLC, ≥ 99.5% (GC), FLUKA
n-Octan, puriss. p.a., Standard für GC, ≥ 99.8% (GC), FLUKA
n-Nonan, puriss. p.a., Standard für GC, ≥ 99.8% (GC), FLUKA
n-Decan, puriss. purum, ≥ 98.0% (GC), FLUKA
Cyclooctan, purum, ≥ 99.0% (GC), FLUKA
2,2,4-Trimethylpentan, für HPLC, ≥ 99.5% (GC), FLUKA
2,2-Dimethylhexan, purum, ~ 98.0% (GC), FLUKA

Die Kieselsäure, die in der erfindungsgemäßen Kautschukmischung enthalten ist, kann nach einem Verfahren hergestellt werden, welches folgende Schritte umfasst:

a) Vorlegen einer wässrige Lösung eines Alkali- oder Erdalkalisilikats und / oder einer organischen und / oder anorganischen Base
b) gleichzeitiges Zudosieren von zumindest einem Alkali- und oder Erdalkalisilikat und zumindest einem Säuerungsmittel in diese Vorlage unter Rühren bei 75 bis 88 °C für 60 bis 120, bevorzugt 70 bis 90 Minuten
c) Optional Fortsetzen der Zugabe des in Schritt b) verwendeten Säuerungsmittels und / oder eines anderen Säuerungsmittels, mit gleicher oder veränderter Dosierrate wie in Schritt b), solange, bis ein pH-Wert der Fällsuspension von 7 bis 10 erreicht ist und Nachrühren der erhaltenen Suspension bei diesem pH-Wert für 40 bis 80 Minuten, bei hohen Temperaturen von 80 bis 98 °C.
d) Rücksäuern mit zumindest einem Säuerungsmittel auf einen pH-Wert von etwa 5 bis etwa 8
e) Rücksäuern mit zumindest einem Säuerungsmittel auf einen pH-Wert von 4 bis 5 wobei die Dosierrate des Säuerungsmittels kleiner ist als in Schritt d).
f) Filtrieren der Fällsuspension
g) Waschen des Filterkuchens
h) Optional Verflüssigen des Filterkuchens

i) Trocknen
j) optional Vermahlen und / oder Granulieren

Die Vorlage in Schritt a) des Verfahrens kann ca. 20, 30, 40, 50, 60, 70, 80 oder 90 % des Endvolumens der Fällung betragen. Die zur Vorlage gegebenen basischen Verbindungen sind insbesondere ausgewählt aus der Gruppe der Alkalihydroxide, Erdalkalihydroxide, Alkalicarbonate, Alkalihydrogencarbonate und Alkalisilikate. Bevorzugt werden Wasserglas und / oder Natronlauge verwendet. Der pH-Wert der Vorlage liegt zwischen 7 und 14, bevorzugt zwischen 10 und 11.

Die Zugabe von zumindest einem Alkali- und oder Erdalkalisilikat und zumindest einem Säuerungsmittel während Schritt b) erfolgt bevorzugt derart, dass die Fällung bei konstanter Alkalizahl von 15 bis 40, besonders bevorzugt 15 bis 25 erfolgt.

Während der gleichzeitigen Zugabe des Alkali- und / oder Erdalkalisilikats in Schritt b) wird die Reaktionsmischung innig gerührt. In einer besonders bevorzugten Ausführungsform des Verfahrens wird die Reaktionslösung in Schritt b) und / oder c) nicht nur gerührt sondern zusätzlich mittels eines Scheraggregats Scherenergie eingebracht um die Dispergierbarkeit der erhaltenen Partikel weiter zu verbessern.

In Anschluss an Schritt b) wird im Verfahren die Alkali- und / oder Erdalkalisilikats gestoppt.

Während einem oder mehreren der Schritte a) bis j) kann optional eine zusätzliche Zugabe von organischen oder anorganischen Salzen erfolgen. Dies kann in Lösung oder als Feststoff, jeweils kontinuierlich über die Zugabezeit des Wasserglases und des Säuerungsmittels oder als Batchzugabe durchgeführt werden. Es ist auch möglich, die Salze in einer oder beiden Komponenten zu lösen und dann gleichzeitig mit diesen zuzugeben.

Als anorganische Salze werden bevorzugt Alkali- oder Erdalkalisalze verwendet. Insbesondere können alle Kombinationen der folgenden Ionen eingesetzt werden:
$Li^+$, $Na^+$, $K^+$, $Rb^+$, $Be^{2+}$, $Mg^{2+}$, $Ca^{2+}$, $Sr^{2+}$, $Ba^{2+}$, $H^+$, $F^-$, $Cl^-$, $Br^-$, $I^-$, $SO_3^{2-}$, $SO_4^{2-}$, $HSO_4^-$, $PO_3^{3-}$, $PO_4^{3-}$, $NO_3^-$, $NO_2^-$, $CO_3^{2-}$, $HCO_3^-$, $OH^-$, $TiO_3^{2-}$, $ZrO_3^{2-}$, $ZrO_4^{4-}$, $AlO_2^-$, $Al_2O_4^{2-}$, $BO_4^{3-}$. Als organische Salze sind die Salze der Ameisen-, Essig- und Propionsäure geeignet. Als Kation seien die genannten Alkali- oder Erdalkaliionen genannt. Die Konzentration dieser Salze in der Zugabelösung kann 0,01 bis 5 mol/l betragen. Bevorzugt wird als anorganisches Salz $Na_2SO_4$ verwendet.

Es ist möglich, die Säuerungsmittel in den Schritten b) bis d) in gleicher oder unterschiedlicher Weise zuzuführen, d. h. mit gleicher oder unterschiedlicher Konzentration und / oder Zulaufgeschwindigkeit.

Analog kann auch das Alkali- und / oder Erdalkalisilikat in den Schritten a) und b) in gleicher oder unterschiedlicher Weise der Reaktion zugeführt werden.

Als Alkali- und / oder Erdalkalislilikat können neben Wasserglas (Natriumsilikat-Lösung) auch andere Silikate wie Kalium- oder Calciumsilikat verwendet werden. Als Säuerungsmittel können neben Schwefelsäure auch andere Säuerungsmittel wie HCl, $HNO_3$, $H_3PO_4$ oder $CO_2$ eingesetzt werden.

Die Filtration, Verflüssigung (z. B. gemäß DE 2447613) und Lang- oder Kurzzeittrocknung der verwendeten Kieselsäuren in den Schritten f) bis i) sind dem Fachmann geläufig und können z.B. in der einschlägigen Fachliteratur nachgelesen werden. Die Filtration und das Waschen der Kieselsäure erfolgt bevorzugt in der Art und Weise, dass die Leitfähigkeit des Endprodukts < 2000 $\mu$S/cm und besonders < 1300 $\mu$S/cm beträgt (4 Gew.%ige Suspension in Wasser).

Bevorzugt wird der gewaschene Filterkuchen nach Schritt g) in Schritt h) durch Zugabe von Wasser und / oder zumindest einem Säuerungsmittel verflüssigt und danach getrocknet. Bei dieser Verflüssigung kann in einer speziellen Ausführungsform während der Verflüssigung Aluminium, bevorzugt in Form eines Aluminats, besonders bevorzugt in Form von Natriumaluminat zugegeben werden. Dadurch kann ein erhöhter Aluminiumgehalt in der resultierenden Fällungskieselsäure erzielt werden.

Die verwendete Kieselsäure wird bevorzugt in einem Stromtrockner, Sprühtrockner, Etagentrockner, Bandtrockner, Drehrohrtrockner, Flash-Trockner, Spin-Flash-Trockner oder Düsenturm getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden. Eine Düsenturmtrocknung kann beispielsweise wie in EP 0937755 beschrieben durchgeführt werden.

Nach der Trocknung kann gegebenenfalls eine Vermahlung und / oder Granulation mit einem Walzenkompaktor durchgeführt werden. Bevorzugt liegt die in der erfindungsgemäßen Kautschukmischung enthaltene Fällungskieselsäure nach dem Trockungsschritt oder der Vermahlung in Form eines Pulvers mit einer mittels **Laserbeugung** bestimmten Partikelgröße $d_{50}$ von 1 bis 80 $\mu$m vor. Die pulverförmigen Partikel können eine unregelmäßige, aber auch eine regelmäßige äußere Form aufweisen, d. h. sie können z. B. auch in etwa sphärische Partikel sein. Besonders bevorzugt liegt die Fällungskieselsäure nach einer Düsenturmtrocknung in Form von in etwa sphärischen Partikel (Mikrogranulat) mit einer, mittels der Siebrückstandsbestimmung (Alpine) bestimmten, Partikelgröße $d_{50}$ von 80 $\mu$m bis 1000 $\mu$m vor. Im letztgenannten Fall wird die Kieselsäure vorzugsweise mittels Düsenturmtrocknung, wie in EP 0937755 beschrieben, hergestellt und zeigen eine für diese Trocknungsmethode charakteristische äußere Form (siehe Abbildungen in EP 0937755) Ganz besonders bevorzugt liegt die Fällungskieselsäure in Form von Granulaten ($d_{50}$ > 1000 $\mu$m (Alpine

Siebrückstand)) vor und weist nach der Granulation eine Partikelgrößenverteilung derart auf, dass mittels der Siebrückstandsbestimmung (Ro-Tap) mindestens 80 Gew.-% der Partikel größer als 300 μm und maximal 10 Gew.-% kleiner als 75 μm sind.

Als ganz besonders geeignet zur Herstellung der Kieselsäure mir rauer Oberfläche hat sich die Spin-Flash-Trocknung mit anschließender Walzengranulation herausgestellt. Die Granulation kann beispielsweise mit einer Walzenpresse des Typs WP 50N/75 der Fa. Alexanderwerk AG, Remscheid durchgeführt werden. Bevorzugt wird dabei das pulverförmige Produkt ohne weitere Zugabe von Bindemitteln oder Flüssigkeiten über ein horizontales Einspeisesystem mit Einfachschnecke durch ein Vakuumsystem entlüftet und gleichmäßig zwischen die beidseitig gelagerten vertikal angeordneten Walzen eingebracht. Das Pulver wird dabei zu einer Schülpe verpresst und mittels eines Brechers in die gewünschte maximale Granulatgröße gebracht.

Die erfindungsgemäße Kautschukmischung enthält zumindest einen Dienkautschuk, der ausgewählt ist aus der Gruppe, bestehend aus natürlichem Polyisopren und / oder synthetischem Polyisopren und / oder Polyethylen und / oder Polybutadien und / oder Styrol-Butadien-Copolymer und / oder lösungspolymerisiertes Styrol-Butadien-Copolymer und / oder emulsionspolymerisiertes Styrol-Butadien-Copolymer und / oder Styrol-Isopren-Butadien-Terpolymer und / oder Butylkautschuk und / oder Halobutylkautschuk und / oder Ethylen-Propylen-Dien-Kautschuk und / oder Chloropren-Kautschuk.

Der oder die verwendeten oben genannten Dienkautschuk oder Dienkautschuke kann oder können hierbei mit Hydroxylgruppen und / oder mit Epoxygruppen und / oder mit Siloxangruppen und / oder mit primären oder sekundären Aminogruppen und / oder Alkoxysilylgruppen und / oder Carboxylgruppen und / oder Mercaptogruppen und / oder Aminosiloxangruppen und / oder weiteren, dem Fachmann bekannten, Gruppen modifiziert sein.
Der Dienkautschuk kann auch nicht funktionalisiert sein, so dass in der Kautschukmischung entweder alle Kautschuke, ein Teil der Kautschuke oder kein Kautschuk funktionalisiert sind bzw. ist.

Eine hohe spezifische CTAB-Oberfläche der Fällungskieselsäure ist Grundvoraussetzung für ein ausreichend gutes Verstärkungspotential. Die verwendete Fällungskieselsäure weist daher eine CTAB-Oberfläche ≥ 150 $m^2/g$ , bevorzugt von 160 bis 220 $m^2/g$, besonders bevorzugt von 160 bis 190 $m^2/g$ und ganz besonders bevorzugt von 165 bis 185 $m^2/g$ auf.

Die spezifische BET-Oberfläche (vgl. S. Brunauer, P. H. Emmett, E. Teller, "Adsorption of Gases in Multimolecular Layers", J. Am. Chem. Soc. 60, 309 (1938)) beschreibt den Einfluss der Fällungskieselsäure auf das Einarbeitungsverhalten in die Kautschukmischung, die Rohmischungseigenschaften, sowie die Vulkanisationskinetik. In einer weiteren speziellen Ausführungsform weist die verwendete Fällungskieselsäure eine BET-Oberfläche von ≥ 150 $m^2/g$, bevorzugt von 150 bis 220 $m^2/g$, besonders bevorzugt von 160 bis 210 $m^2/g$ und ganz besonders bevorzugt von 165 bis 195 $m^2/g$ auf.

Die hinreichend hohe DPB- Zahl der verwendeten Fällungskieselsäure sichert die ausreichend gute Dispergierbarkeit in der Kautschukmischung. Die Fällungskieselsäure weist daher eine DBP-Zahl von 180 bis 350 g/(100 g), bevorzugt von 180 bis 300 g/(100 g) und von 190 bis 290 g/(100 g), besonders bevorzugt von 200 bis 280 g/(100 g) und ganz besonders bevorzugt von 210 bis 270 g/ (100 g) auf. In einer bevorzugten Ausführungsform beträgt die DBP-Zahl 200 bis 350 g/(100 g), besonders bevorzugt 210 bis 350 g/(100 g), ganz besonders bevorzugt 220 bis 350 g/(100 g), insbesondere bevorzugt 230 bis 320 g/(100 g) und speziell bevorzugt 240 bis 290 g/(100 g) für Pulver und in etwa sphärische Partikel (Mikrogranulat). In einer anderen bevorzugten Ausführungsform beträgt die DBP-Zahl 180 bis 300 g/(100 g), besonders bevorzugt 190 bis 280 g/(100 g), ganz besonders bevorzugt 200 bis 260 g/(100 g), insbesondere bevorzugt 210 bis 250 g/(100 g) und speziell bevorzugt 210 bis 240 g/(100 g) für Granulate.

Es hat sich als weitere wichtige Voraussetzung für einen verbessertes Abriebsverhalten der Kautschukmischung herausgestellt, dass die verwendete Fällungskieselsäure eine enge und homogene Partikelgrößenverteilung aufweisen muss. Die Breite der Partikelgrößenverteilung, ermittelt mittels Scheibenzentrifuge, wird dabei durch die auf die Lage des Reflexes normierte Halbwertsbreite des Reflexes (engl.: half width / peak) und die Homogenität durch den Quotient d 25 % / d 75 % charakterisiert. Die theoretisch höchst mögliche Homogenität wäre demnach bei einem Wert von 1,0 gegeben. Je näher sich dieses Verhältnis 1,0 nähert, desto besser, sprich homogener ist die Fällungskieselsäure.

Die Fällungskieselsäure weist daher eine auf die Lage des Reflexes normierte Halbwertsbreite des Reflexes (half width / peak) ≤ 0,95, bevorzugt ≤ 0,90, besonders bevorzugt 0,50 bis 0,90 und insbesondere bevorzugt 0,65 bis 0,90 auf.

Weiterhin weist die verwendete Fällungskieselsäure ein Homogenitäts-Verhältnis d 25 % / d 75 % von 1,00 bis 1,80, bevorzugt 1,20 bis 1,80, besonders bevorzugt 1,30 bis 1,80 und ganz besonders bevorzugt 1,40 bis 1,75 auf.

Ein wesentlicher Gesichtspunkt der vorliegenden Erfindung ist unter anderen, dass für eine homogene Verstärkung ein Feinheitsindex $F.V._{(gepresst)}$, der in einem Bereich von 100 bis 140 Å und bevorzugt 100 bis 130 Å liegt, notwendig ist.
Dieser Porengrößenbereich entspricht vorwiegend dem Porenvolumen zwischen den zu Kieselsäureaggregaten verwachsenen Primärpartikeln und erlaubt eine Aussage über deren Aggregation. Die relative Breite $\gamma_{(gepresst)}$ der verwendeten Kieselsäure ist sehr eng, so dass nur geringe Schwankungen zwischen den Partikeln festzustellen sind. Dies ist

eine wesentliche Voraussetzung für eine homogene und gleichmäßige Verstärkung und somit für ein gutes Abriebsverhalten. Die relative Breite $\gamma_{(gepresst)}$ der Porengrößenverteilung liegt bei ≤ 2,8 (g nm)/ml, bevorzugt im Bereich von 1,0 bis 2,7 (g nm)/ml, besonders bevorzugt von 1,3 bis 2,6 (g nm)/ml und ganz besonders bevorzugt von 1,5 bis 2,5 (g nm)/ml sowie von 1,7 bis 2,4 (g nm)/ml.

In einer bevorzugten Ausführungsform zeichnen sich die verwendete Fällungskieselsäure, wie bereits oben erwähnt, durch eine besonders hohe Rauhigkeit der Oberfläche und somit eine besonders gute Anbindung des Kopplungsmittels aus. Der Morphologie-Index, IM, der Fällungskieselsäuren liegt bei 0,20 bis 0,85, bevorzugt bei 0,30 bis 0,80, besonders bevorzugt 0,40 bis 0,80 und ganz besonders bevorzugt 0,50 bis 0,80.

Das Quecksilber-Porenvolumen V1 entspricht dem Porenvolumen der Poren mit einem Durchmesser < 400 Å, welche einen wesentlichen Einfluss auf die Verstärkung haben. Bei der verwendeten Fällungskieselsäure hat sich gezeigt, dass es vorteilhaft ist, wenn ein wesentlicher Teil dieses Porenvolumens V2 von Poren mit einem Durchmesser von 175 bis 275 Å gebildet wird. Wenn dies der Fall ist und wie zuvor beschrieben, der relative Breite $\gamma_{(gepresst)}$ der Poren und der Feinheitsindex $F.V._{(gepresst)}$ in den im Anspruch 1 genannten Bereichen liegen, wurden besonders gute Abriebswerte gefunden, so dass die Fällungskieselsäure bevorzugt ein Porenvolumenverhältnis $V2/V1_{(gepresst)}$ von 0,20 bis 0,75, besonders bevorzugt 0,25 bis 0,6, ganz besonders bevorzugt 0,30 bis 0,60 und insbesondere bevorzugt von 0,3 bis 0,55 aufweist.

In einer speziellen Ausführungsform der vorliegenden Erfindung enthält die verwendete Fällungskieselsäure Aluminium, wobei der Aluminiumgehalt in Form von $Al_2O_3$ im Bereich von 0,1 bis 5 Gew. %, bevorzugt von 0,1 bis 2 Gew. %, besonders bevorzugt von 0,2 bis 1 Gew. % und ganz besonders bevorzugt von 0,3 bis 0,8 Gew. % beträgt. Überraschenderweise hat sich gezeigt, dass durch den erhöhten Aluminiumgehalt die Rohmischungseigenschaften einer mit einer solchen Fällungskieselsäure gefüllten Kautschukmischung verbessert werden. So zeigt sich ein niedriges Drehmomentsminimum bei der MDR (Vulkanisationsisotherme) Prüfung und ein schnelleres und daher verbessertes Vulkanisationsverhalten. Somit können den Vorteilen der verwendeten Fällungskieselsäure mit weniger als 0,1 Gew. -% $Al_2O_3$ durch die $Al_2O_3$ Zugabe noch weitere Vorteile gegenüber Kieselsäuren des Standes der Technik zugefügt werden.

Noch weiter verbessert werden kann die Anbindungsfähigkeit des Kopplungsmittels wenn eine hinreichend hohe Zahl an Silanolgruppen auf der Oberfläche der Fällungskieselsäure vorhanden ist, da die Silanolgruppen die Anbindungsstellen für das Kopplungsmittel darstellen. In einer weiteren bevorzugten Ausführungsform weist die Fällungskieselsäure daher eine modifizierte Searszahl Vol 2 von 13 bis 30 ml / (5g), bevorzugt 15 bis 29 ml / (5g), besonders bevorzugt 17 bis 28 ml / (5g) und ganz besonders bevorzugt 23 bis 27 ml / (5g), auf.

Die verwendete Fällungskieselsäure kann in verschiedenen Darreichungsformen vorliegen. Z. B. in Form eines Pulvers mit einer mittels Laserbeugung bestimmten Partikelgröße $d_{50}$ von 1 bis 80 $\mu$m. Die pulverförmigen Partikel können eine unregelmäßige, aber auch eine regelmäßige äußere Form aufweisen, d. h. sie können z. B. auch im Wesentlichen sphärisch sein. Bevorzugt liegt die Fällungskieselsäuren in Form von im wesentlichen sphärischen Partikeln (Mikrogranulat) mit einer, mittels der Siebrückstandsbestimmung (Alpine) bestimmten, Partikelgröße $d_{50}$ von 80 $\mu$m bis 1000 $\mu$m vor. Im letztgenannten Fall wird die Fällungskieselsäure vorzugsweise mittels Düsenturmtrocknung, wie in EP 0937755 beschrieben, hergestellt und zeigen eine für diese Trocknungsmethode charakteristische äußere Form (siehe Abbildungen in EP 0937755).

Besonders bevorzugt liegt die Fällungskieselsäure in Form von Granulaten ($d_{50}$ > 1000 $\mu$m (Alpine Siebrückstand)) vor, und weist nach der Granulation eine Partikelgrößenverteilung derart auf, dass mittels der Siebrückstandsbestimmung (Ro-Tap) mindestens 80 Gew.-% der Partikel größer als 300 $\mu$m und maximal 10 Gew.-% kleiner als 75 $\mu$m sind. Es wurde überraschend gefunden, dass die Darreichungsform als Granulat sich besonders eignet, um die durch die raue Oberfläche der Kieselsäure erzeugten Effekte zu konservieren, so dass diese durch den Transport nicht verloren gehen.

Alle genannten Vorzugsbereiche können unabhängig voneinander eingestellt werden.

Der Mengenanteil der verwendeten Fällungskieselsäure beträgt bevorzugt 1 bis 300 phr, besonders bevorzugt 1 bis 250 phr und ganz besonders bevorzugt 1 bis 200 phr.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird hierbei auf 100 Gewichtsteile der gesamten Masse aller in der Mischung vorhandenen festen Kautschuke bezogen.

Des Weiteren enthält die Kautschukmischung ein Kupplungsagenz in Mengen von 0,1 - 20 phr, bevorzugt 0,5 - 15 phr, besonders bevorzugt 1 - 10 phr,. Das Kupplungsagenz dient zur Verbesserung der Verarbeitbarkeit und zur Anbindung der Kieselsäure und anderer ggf. vorhandener polarer Füllstoffe an die Polymermatrix und reagiert mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Kupplungsagenz findet bevorzugt Silan Verwendung und es können dabei alle dem Fachmann bekannten Silan-Kupplungsagenzien verwendet werden.

In der Kautschukmischung können zusätzlich noch 0 - 100 phr, bevorzugt 0 - 80 phr, wenigstens aber 0,1 phr, insbesondere wenigstens 0,5 phr, zumindest eines Rußes enthalten sein. Es können dabei alle in der Kautschukindustrie verwendeten Russarten zum Einsatz kommen.
Weiterhin können noch andere Füllstoffe in der Kautschukmischung vorhanden sein.
Bei den anderen Füllstoffen kann es sich z. B. faserige Materialien (Natur- oder Synthesefasern), Talk, Kreide, Gummimehl, Metalloxide, verschiedene Mikro- bzw. Kautschukgele und / oder weitere Carbonate oder Silikate oder Ähnliches handeln.

Weitere Zusatzstoffe beinhaltet im Wesentlichen Weichmacher, Wachse, Alterungsschutzmittel, Mastikationshilfsmittel und Aktivatoren.
Der Mengenanteil der Gesamtmenge an Zusatzstoffen beträgt 3 bis 150 phr, bevorzugt 3 bis 100 phr, besonders bevorzugt 5 bis 80 phr.

Die erfindungsgemäße Kautschukmischung enthält weiterhin 0,1 - 100 phr, bevorzugt 0,1 - 80 phr, zumindest eines Weichmacheröls, wobei das Weichmacheröl ein Mineralöl ist, das ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle.

Es können in der Kautschukmischung noch 0 - 20 phr zumindest eines weiteren zusätzlichen Weichmachers vorhanden sein. Dieser weitere Weichmacher kann ein synthetischer Weichmacher und / oder eine Fettsäure und / oder ein Fettsäurederivat und / oder ein Harz und / oder ein Faktis sein.

Die Herstellung der erfindungsgemäßen Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Vulkanisation der Kautschukfertigmischung wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungsschritt in den vom Fachmann gebräuchlichen Mengen (0.4 bis 4 phr, Schwefel bevorzugt in Mengen von 1.5 bis 2.5 phr) der Kautschukmischung zugesetzt. Die Fertigmischung wird z.B. durch einen Extrusionsvorgang weiterverarbeitet und in die entsprechende Form gebracht. Zur Verwendung in Fahrzeugreifen wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche aus der erfindungsgemäßen Kautschukmischung hergestellt worden ist.

Die Erfindung wird nun anhand von Vergleichs- und Ausführungsbeispielen näher erläutert werden, ohne jedoch auf diese Beispiele beschränkt zu sein. Die Tabelle 2 zeigt sowohl die Mischungsbestandteile auf, als auch die dazugehörigen physikalischen Eigenschaften der Kautschukmischungen anhand Prüfergebnisse an verschiedenen Prüfkörpern. Bei dem Mischungsbeispielen mit dem Anfangsbuchstaben V handelt es sich um Vergleichsmischungen mit kommerziell erhältlichen Fällungskieselsäuren, bei den Mischungsbeispielen mit dem Anfangsbuchstaben E um erfindungsgemäße Kautschukmischungen mit Fällungskieselsäuren gemäß den Kennzeichen des Anspruchs 1.
Tabelle 3 weist die Charakteristika der verwendeten Kieselsäuren auf.

Die Mischungsherstellung auf Laborebene erfolgte nach dem obig beschriebenen Verfahren in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:

- Shore-A-Härte bei Raumtemperatur gemäß DIN 53 505
- Rückprallelastizität bei 70°C gemäß DIN 53 512
- Spannungswert bei 300 % statischer Dehnung bei Raumtemperatur gemäß DIN 53 504
- Abrieb nach Grosch gemäß Grosch, K.A., the 131th ACS Rubber Div. Meeting, No. 97 (1987) und Grosch, K.A. et al., Kautschuk Gummi Kunststoffe, 50, 841 (1997)

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird hierbei auf 100 Gewichtsteile der gesamten Masse aller in der Mischung vorhandenen festen Kautschuke bezogen.
Wie aus der Tabelle 3 zu entnehmen ist, weisen die erfindungsgemäßen Kautschukmischungen E1 bis E5 bei gleichbleibender Härte eine deutliche Verbesserung hinsichtlich des Abriebsverhaltens auf. Der Abriebsvorteil wird zum Teil sogar verdoppelt, siehe E2 und E3. Gleichzeitig verbleiben das Rollwiderstandsverhalten, dargestellt durch den Wert für die Rückprallelastizität bei 70°C, und das Dehnungsverhalten auf einem vergleichbaren Niveau.

**Tabelle 2**

| Bestandteile | Einheit | V1 | V2 | E1 | E2 | E3 | E4 | E5 |
|---|---|---|---|---|---|---|---|---|
| Kautschukmatrix[a] | phr | 100 | 100 | 100 | 100 | 100 | 100 | 100 |
| Kieselsäure A[1] | phr | 92 | | | | | | |
| Kieselsäure B[2] | phr | | 92 | | | | | |
| Kieselsäure C | phr | | | 92 | | | | |
| Kieselsäure D | phr | | | | 92 | | | |
| Kieselsäure E | phr | | | | | 92 | | |
| Kieselsäure F | phr | | | | | | 92 | |
| Kieselsäure G | phr | | | | | | | 92 |
| Weichmacher[b] | phr | 24 | 24 | 24 | 24 | 24 | 24 | 24 |
| Alterungsschutzmittel | phr | 6.5 | 6.5 | 6.5 | 6.5 | 6.5 | 6.5 | 6.5 |
| ZnO, Stearinsäure und Prozesshilfsmittel | phr | 8 | 8 | 8 | 8 | 8 | 8 | 8 |
| Silan[c] | phr | 8 | 8 | 8 | 8 | 8 | 8 | 8 |
| Beschleuniger | phr | 4 | 4 | 4 | 4 | 4 | 4 | 4 |
| Schwefel | phr | 1.8 | 1.8 | 1.8 | 1.8 | 1.8 | 1.8 | 1.8 |
| **Eigenschaften** | | | | | | | | |
| Härte bei RT | Shore A | 61 | 61 | 61 | 61 | 61 | 61 | 61 |
| Rückprall 70°C | N/mm$^2$ | 36.9 | 36.5 | 36 | 36.8 | 37 | 36.4 | 37 |
| Spannungswert 300 % | MPa | 4.9 | 5 | 5.2 | 5.2 | 5.3 | 5.4 | 5.3 |
| Abrieb (Grosch) | % | 100 | 130 | 190 | 200 | 200 . | 195 | 180 |

[a] Zusammensetzung der Kautschukmatrix: 17 phr NR (SMR 20, AC Regional Rubber), 43 phr BR (Buna CB 24, Lanxess), 40 phr SSBR (Budene 7076, Goodyear Chemicals)
[b] Weichmacher: TDAE
[c] Silan: Silquest A-1589 Silane, General Electric SP
[1] Ultrasil 7000 GR, Evonik Degussa GmbH
[2] Zeosil 1165 MP, Rhodia Deutschland GmbH

**Tabelle 3**

| Eigenschaft | Einheit | A[1] | B[2] | C | D | E | F | G |
|---|---|---|---|---|---|---|---|---|
| BET | m$^2$/g | 173 | 152 | 185 | 190 | 183 | 170 | 172 |
| CTAB | m$^2$/g | 157 | 159 | 177 | 174 | 176 | 162 | 152 |
| DBP | g/(100g) | 235 | 240 | 221 | 216 | 261 | 222 | 224 |
| Modifizierte Searszahl Vol 2 | ml/(5g) | 15,9 | 20,2 | 25,8 | 25,2 | 25,1 | 26,3 | 24,7 |
| **CPS Disc Centrifuge** | | | | | | | | |
| Halbwertsbreite / Reflex | | 1,07 | 0,91 | 0,82 | 0,79 | 0,84 | 0,78 | 0,81 |
| Verhältnis d25% / d75% | | 1,86 | 1,70 | 1,63 | 1,58 | 1,63 | 1,57 | 1,59 |
| **Hg Porosimetrie mit Druckvorbehandlung)** | | | | | | | | |
| Relative Breite $\gamma_{(gepresst)}$ | nm g | 3,20 | 3,09 | 2,06 | 1,89 | 1,89 | 2,27 | 1,95 |
| V2/V1$_{(gepresst)}$ | | 0,65 | 0,68 | 0,46 | 0,36 | 0,39 | 0,7 | 0,66 |
| Feinheitsindex F.V.$_{(gepresst)}$ | Å | 123 | 129 | 105 | 101 | 102 | 128 | 121 |
| **Hg Porosimetrie mit Druckvorbehandlung** | | | | | | | | |
| Relative Breite $\gamma$ | nm g | 3,61 | 4,60 | 2,43 | 1,93 | 2,39 | 2,07 | 2,06 |
| V2/V1 | | 0,57 | 0,55 | 0,61 | 0,64 | 0,65 | 0,72 | 0,69 |
| Feinheitsindex F.V. | Å | 145 | 148 | 119 | 119 | 130 | 137 | 134 |

(fortgesetzt)

| Hg Porosimetrie mit Druckvorbehandlung | | | | | | | | |
|---|---|---|---|---|---|---|---|---|
| Morphologieindex (IM) (Mittelwert) | | 0,85 | 0,86 | 0,66 | 0,63 | 0,62 | 0,69 | 0,72 |
| [1] Ultrasil 7000 GR, Evonik Degussa GmbH<br>[2] Zeosil 1165 MP, Rhodia Deutschland GmbH | | | | | | | | |

## Patentansprüche

**1.** Kautschukmischung **gekennzeichnet durch** folgende Zusammensetzung:

- zumindest einen Dienkautschuk und
- zumindest eine Fällungskieselsäure mit einer CTAB-Oberfläche größer oder gleich 150 $m^2$ / g und einer BET-Oberfläche größer oder gleich 150$m^2$ / g und einer DBP-Zahl zwischen 180 und 350 g / 100g und eine auf die Lage des Reflexes normierte Halbwertsbreite des Reflexes von kleiner oder gleich 0,95 und einem Homogenitätsverhältnis d 25 % zu d 75 % von 1,00 bis 1,80 und einer relativen Breite $\gamma$, 5s gepresst mit 1t von kleiner oder gleich 2,8 (g nm) / ml und einem Feinheitsindex F.V., 5s gepresst mit 1t zwischen 100 und 140 Å und
- weitere Zusatzstoffe.

**2.** Kautschukmischung nach Anspruch 1, **dadurch gekennzeichnet, dass** die Fällungskieselsäure einen Morphologie-Index IM von 0,20 bis 0,85 aufweist.

**3.** Kautschukmischung nach einem der Ansprüche 1 bis 2, **dadurch gekennzeichnet, dass** die Fällungskieselsäure ein Porenvolumenverhältnis (V2 / V1), 5s gepresst mit lt von 0,2 bis 0,75 aufweist.

**4.** Kautschukmischung nach einem der Ansprüche 1 bis 3, **dadurch gekennzeichnet, dass** die Fällungskieselsäure einen $Al_2O_3$-Gehalt von 0,1 bis 5,0 Gew. % aufweist.

**5.** Kautschukmischung nach einem der Ansprüche 1 bis 5, **dadurch gekennzeichnet, dass** die Fällungskieselsäure einen Feinheitsindex F.V., 5s gepresst mit lt von 100 bis 130 Å aufweist.

**6.** Kautschukmischung nach einem der Ansprüche 1 bis 5, **dadurch gekennzeichnet, dass** die Fällungskieselsäure eine relative Breite $\gamma$, 5s gepresst mit 1t, der Porengrößenverteilung von 1,5 bis 2,5 (g nm)/ml aufweist.

**7.** Kautschukmischung nach einem der Ansprüche 1 bis 6, **dadurch gekennzeichnet, dass** die Fällungskieselsäure eine auf die Lage des Reflexes normierte Halbwertsbreite des Reflexes von 0,65 bis 0,9 aufweist.

**8.** Kautschukmischung nach einem der Ansprüche 1 bis 7, **dadurch gekennzeichnet, dass** die Fällungskieselsäure ein Homogenitätsverhältnis d 25 % zu d 75 % von 1,20 bis 1,80 aufweist.

**9.** Kautschukmischung nach einem der Ansprüche 1 bis 8, **dadurch gekennzeichnet, dass** die Fällungskieselsäure eine BET-Oberfläche von 160 bis 210 $m^2$/g und / oder eine CTAB-Oberfläche von 160 bis 190 $m^2$/g und / oder einen Morphologie-Index IM von 0,50 bis 0,80 und / oder ein Porenvolumenverhältnis V2 / V1 (5s gepresst mit 1t) von 0,3 bis 0,6 und / oder einen $Al_2O_3$-Gehalt von 0,1 bis 2 Gew. % und/oder eine modifizierte Searszahl Vol 2 von 23 bis 27 ml / (5g) aufweist.

**10.** Kautschukmischung nach einem der Ansprüche 1 bis 9, **dadurch gekennzeichnet, dass** es sich bei der Fällungskieselsäure um ein Granulat mit einer Partikelgrößenverteilung, welche derart ausgestaltet ist, dass mittels der Siebrückstandsbestimmung (Ro-Tap) mindestens 80 Gew.-% der Partikel größer als 300 $\mu$m und maximal 10 Gew.-% kleiner als 75 $\mu$m sind, oder um ein Pulver mit einer, mittels Laserbeugung bestimmten, mittleren Partikelgröße $d_{50}$ von 15 bis 80 $\mu$m oder um sphärische Partikel mit einer, mittels der Siebrückstandsbestimmung (Alpine) bestimmten, Partikelgröße $d_{50}$ von 80 $\mu$m bis 1000 $\mu$m, handelt.

**11.** Kautschukmischung nach einem der Ansprüche 1 bis 10, **dadurch gekennzeichnet, dass** die Fällungskieselsäure durch ein Kupplungsagenz an die Polymermatrix angebunden ist.

**12.** Kautschukmischung nach Anspruch 11, **dadurch gekennzeichnet, dass** die Menge des Kupplungsagenz 0,1 - 20 phr beträgt.

**13.** Verwendung einer Kautschukmischung nach einem der Ansprüche 1 bis 12 zur Herstellung eines Reifens.

**14.** Verwendung einer Kautschukmischung nach Anspruch 13 zur Herstellung des Laufstreifens eines Reifens und / oder der Body-Mischung eines Reifens, beinhaltend Seitenwand, Innenseele, Apex, Gürtel, Schulter, Gürtelprofil, Squeege, Karkasse, Wulstverstärker und / oder Bandage.

**15.** Verwendung einer Kautschukmischung nach einem der Ansprüche 1 bis 12 zur Herstellung eines Gurtes und / oder eines Riemens.

## Claims

**1.** Rubber mixture, **characterized by** the following composition:

- at least one diene rubber and
- at least one precipitated silica with a CTAB surface area greater than or equal to 150 $m^2/g$ and a BET surface area greater than or equal to 150 $m^2/g$ and a DBP number between 180 and 350 g/100 g and a half-height width of the reflection normalized to the position of the reflection of less than or equal to 0.95 and a homogeneity ratio d 25% to d 75% of 1.00 to 1.80 and a relative width $\gamma$, pressed at 1 t for 5 s, of less than or equal to 2.8 (g nm)/ml and a fineness value F.V., pressed at 1 t for 5 s, between 100 and 140 Å and
- further additives.

**2.** Rubber mixture according to Claim 1, **characterized in that** the precipitated silica has a morphology index IM of 0.20 to 0.85.

**3.** Rubber mixture according to either of Claims 1 and 2, **characterized in that** the precipitated silica has a pore volume ratio (V2/V1), pressed at 1 t for 5 s, of 0.2 to 0.75.

**4.** Rubber mixture according to any of Claims 1 to 3, **characterized in that** the precipitated silica has an $Al_2O_3$ content of 0.1 to 5.0% by weight.

**5.** Rubber mixture according to any of Claims 1 to 5, **characterized in that** the precipitated silica has a fineness value F.V., pressed at 1 t for 5 s, of 100 to 130 A.

**6.** Rubber mixture according to any of Claims 1 to 5, **characterized in that** the precipitated silica has a relative width $\gamma$, pressed at 1 t for 5 s, of the pore size distribution of 1.5 to 2.5 (g nm)/ml.

**7.** Rubber mixture according to any of Claims 1 to 6, **characterized in that** the precipitated silica has a half-height width of the reflection normalized to the position of the reflection of 0.65 to 0.9.

**8.** Rubber mixture according to any of Claims 1 to 7, **characterized in that** the precipitated silica has a homogeneity ratio d 25% to d 75% of 1.20 to 1.80.

**9.** Rubber mixture according to any of Claims 1 to 8, **characterized in that** the precipitated silica has a BET surface area of 160 to 210 $m^2/g$ and/or a CTAB surface area of 160 to 190 $m^2/g$ and/or a morphology index IM of 0.50 to 0.80 and/or a pore volume ratio V2/V1 (pressed at 1 t for 5 s) of 0.3 to 0.6 and/or an $Al_2O_3$ content of 0.1 to 2% by weight and/or a modified Sears number, Vol 2, of 23 to 27 ml / (5 g).

**10.** Rubber mixture according to any of Claims 1 to 9, **characterized in that** the precipitated silica is a granule with a particle size distribution configured such that, by means of the screen residue determination (Ro-Tap), at least 80% by weight of the particles are larger than 300 $\mu$m and not more than 10% by weight are smaller than 75 $\mu$m or a powder with a mean particle size dso determined by means of laser diffraction of 15 to 80 $\mu$m, or spherical particles with a particle size $d_{50}$ determined by means of screen residue determination (Alpine) of 80 $\mu$m to 1000 $\mu$m.

**11.** Rubber mixture according to any of Claims 1 to 10, **characterized in that** the precipitated silica is attached to the

polymer matrix by a coupling agent.

**12.** Rubber mixture according to Claim 11, **characterized in that** the amount of the coupling agent is 0.1-20 phr.

**13.** Use of a rubber mixture according to any of Claims 1 to 12 for producing a tire.

**14.** Use of a rubber mixture according to Claim 13 for producing the tread of a tire and/or the body mixture of a tire, comprising sidewall, inner liner, apex, belt, shoulder, belt profile, squeegee, carcass, bead reinforcer and/or bandage.

**15.** Use of a rubber mixture according to any of Claims 1 to 12 for producing a belt and/or a drive belt.

## Revendications

**1.** Mélange de caoutchouc, **caractérisé par** la composition suivante :

- au moins un caoutchouc diénique et
- au moins une silice précipitée ayant une surface CTAB supérieure ou égale à 150 $m^2$/g et une surface BET supérieure ou égale à 150 $m^2$/g et un nombre DBP compris entre 180 et 350 g/100 g et une largeur à mi-hauteur du reflet normée à la position du reflet inférieure ou égale à 0,95, et un rapport d'homogénéité d 25 % à d 75 % de 1,00 à 1,80, et une largeur relative $\gamma$, comprimée pendant 5 s avec 1 t, inférieure ou égale à 2,8 (g nm)/ml et un indice de finesse F.V., comprimée pendant 5 s avec 1 t, compris entre 100 et 140 Å, et
- d'autres additifs.

**2.** Mélange de caoutchouc selon la revendication 1, **caractérisé en ce que** la silice précipitée présente un indice de morphologie IM de 0,20 à 0,85.

**3.** Mélange de caoutchouc selon l'une quelconque des revendications 1 à 2, **caractérisé en ce que** la silice précipitée présente un rapport entre les volumes de pores (V2/V1), comprimée pendant 5 s avec 1 t, de 0,2 à 0,75.

**4.** Mélange de caoutchouc selon l'une quelconque des revendications 1 à 3, **caractérisé en ce que** la silice précipitée présente une teneur en $Al_2O_3$ de 0,1 à 5,0 % en poids.

**5.** Mélange de caoutchouc selon l'une quelconque des revendications 1 à 5, **caractérisé en ce que** la silice précipitée présente un indice de finesse F.V., comprimée pendant 5 s avec 1 t, de 100 à 130 A.

**6.** Mélange de caoutchouc selon l'une quelconque des revendications 1 à 5, **caractérisé en ce que** la silice précipitée présente une largeur relative $\gamma$, comprimée pendant 5 s avec 1 t, de la distribution des tailles de pores de 1,5 à 2,5 (g nm)/ml.

**7.** Mélange de caoutchouc selon l'une quelconque des revendications 1 à 6, **caractérisé en ce que** la silice précipitée présente une largeur à mi-hauteur du reflet normée à la position du reflet de 0,65 à 0,9.

**8.** Mélange de caoutchouc selon l'une quelconque des revendications 1 à 7, **caractérisé en ce que** la silice précipitée présente un rapport d'homogénéité d 25 % à d 75 % de 1,20 à 1,80.

**9.** Mélange de caoutchouc selon l'une quelconque des revendications 1 à 8, **caractérisé en ce que** la silice précipitée présente une surface BET de 160 à 210 $m^2$/g et/ou une surface CTAB de 160 à 190 $m^2$/g et/ou un indice de morphologie IM de 0,50 à 0,80 et/ou un rapport entre les volumes de pores V2/V1 (comprimée pendant 5 s avec 1 t) de 0,3 à 0,6 et/ou une teneur en $Al_2O_3$ de 0,1 à 2 % en poids et/ou un indice de Sears modifié Vol 2 de 23 à 27 ml/(5 g).

**10.** Mélange de caoutchouc selon l'une quelconque des revendications 1 à 9, **caractérisé en ce que** la silice précipitée consiste en un granulat ayant une distribution des tailles de particules qui est configurée de telle sorte qu'au moins 80 % en poids des particules soient supérieures à 300 $\mu$m et au plus 10 % en poids soient inférieures à 75 $\mu$m au moyen de la détermination du refus de tamisage (Ro-Tap), ou en une poudre ayant une taille de particule moyenne $d_{50}$, déterminée par diffraction laser, de 15 à 80 $\mu$m, ou en des particules sphériques ayant une taille de particules dso, déterminée par la détermination du refus de tamisage (Alpine), de 80 $\mu$m à 1 000 $\mu$m.

**11.** Mélange de caoutchouc selon l'une quelconque des revendications 1 à 10, **caractérisé en ce que** la silice précipitée est reliée à la matrice polymère par un agent de couplage.

**12.** Mélange de caoutchouc selon la revendication 11, **caractérisé en ce que** la quantité de l'agent de couplage est de 0,1 à 20 pce.

**13.** Utilisation d'un mélange de caoutchouc selon l'une quelconque des revendications 1 à 12 pour la fabrication d'un pneu.

**14.** Utilisation d'un mélange de caoutchouc selon la revendication 13 pour la fabrication de la bande de roulement d'un pneu et/ou du mélange de corps d'un pneu, contenant la paroi latérale, la chambre à air, l'apex, la ceinture, l'épaulement, le profil de ceinture, la raclette, la carcasse, le renfort de talon et/ou le bandage.

**15.** Utilisation d'un mélange de caoutchouc selon l'une quelconque des revendications 1 à 12 pour la fabrication d'une sangle et/ou d'une courroie.

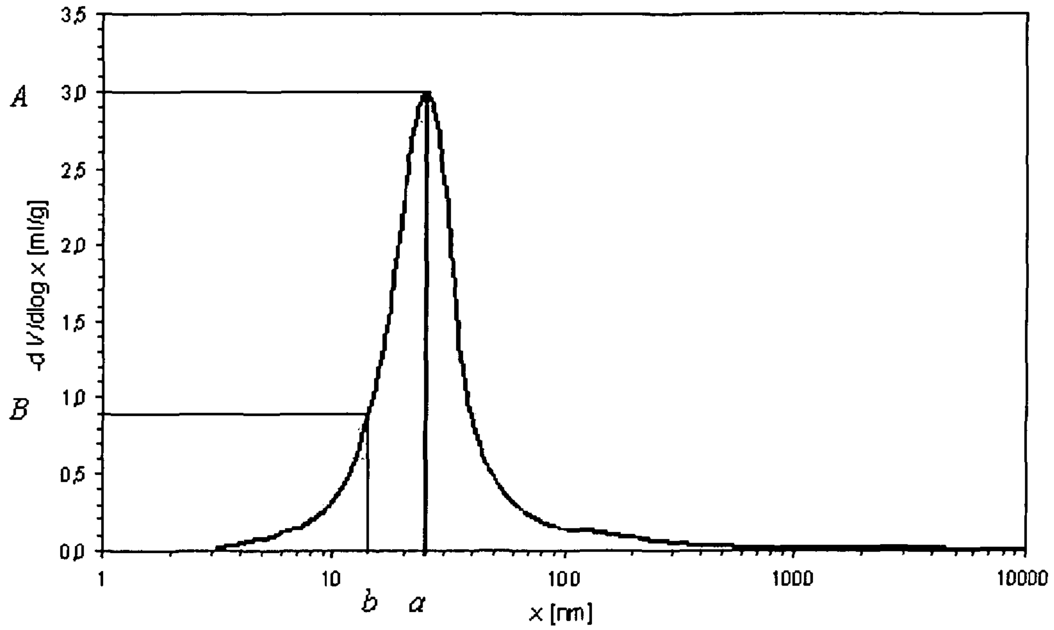


**Figur 1:** Typischer Kurvenverlauf der negativen logarithmischen Ableitung des kumulierten Porenvolumens *V* hinsichtlich des Porendurchmessers *x* mit den Merkmalen *a*, *b*, *A* und *B*.

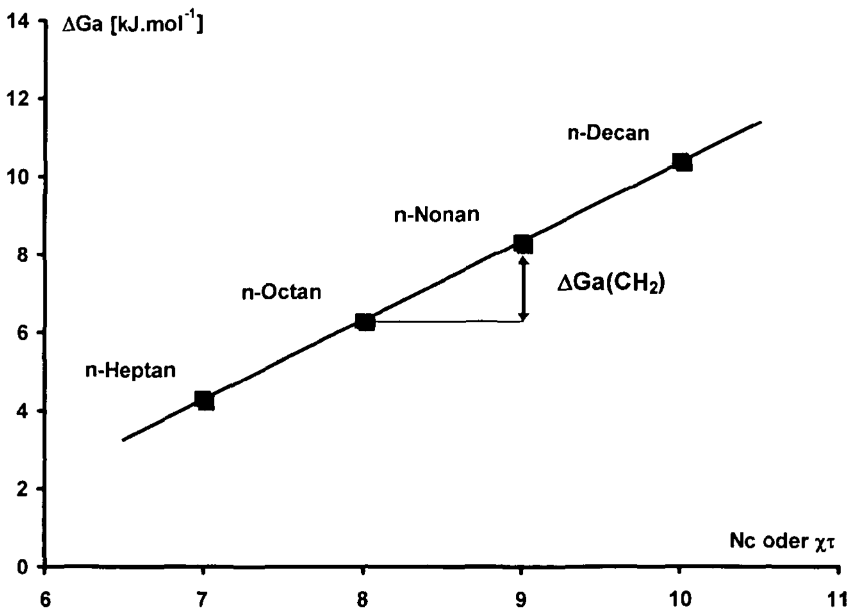


**Figur 2:** Beispiel für die Gerade der n-Alkane zur Bestimmung des Morphologieindex.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0520862 B1
- EP 0670813 B1
- EP 917519 B1
- US 20050004297 A1
- US 5846311 A
- US 5929156 A
- DE 2447613
- US 4094771 A
- EP 0937755 A


### In der Beschreibung aufgeführte Nicht-Patentliteratur


- **S. BRUNAUER ; P. H. EMMETT ; E. TELLER.** Adsorption of Gases in Multimolecular Layers. *J. Am. Chem. Soc.,* 1938, vol. 60, 309
- Abrieb nach Grosch gemäß Grosch, K.A. *the 131th ACS Rubber Div. Meeting,* 1987
- **GROSCH, K.A. et al.** *Kautschuk Gummi Kunststoffe,* 1997, vol. 50, 841